Europäisches Patentamt
European Patent Office
Office européen des brevets

Publication number: 0 301 747 A2

# EUROPEAN PATENT APPLICATION

Application number: 88306594.8

Int. Cl.⁴ C08L 81/02 , C08K 9/08

Date of filing: 19.07.88

Priority: 24.07.87 JP 184747/87

Date of publication of application: 01.02.89 Bulletin 89/05

Designated Contracting States: AT BE CH DE ES FR GB GR IT LI LU NL SE

Applicant: POLYPLASTICS CO. LTD.
30, Azuchimachi 2-chome
Higashi-ku Osaka-shi Osaka(JP)

Inventor: Minamisawa, Tsuyoshi
36-6, Kamo Mishima-shi
Shizuoka(JP)
Inventor: Mitsuuchi, Masamichi
885-11, Miyajima Fuji-shi
Shizuoka(JP)

Representative: Jackson, Peter et al
HYDE, HEIDE & O'DONNELL 146 Buckingham Palace Road
London SW1W 9TR(GB)

## Polyarylene sulfide resin composition.

A polyarylene sulfide resin composition comprises (A) a polyarylene sulfide resin and (B) 1 to 60 percent by weight of a carbon fiber onto which 0.1 to 15 percent by weight, based on the carbon fiber, of a polyurethane resin has been attached.



Xerox Copy Centre

# POLYARYLENE SULFIDE RESIN COMPOSITION

The present invention relates to a carbon fiber-reinforced polyarylene sulfide resin composition which is excellent in mechanical strength, heat resistance, moldability and so on. The polyarylene sulfide resin composition of the present invention is useful as a material for parts necessitated to have high performance, for example, electric and electronic parts and automobile parts.

( Statement of Prior Art )

A polyarylene sulfide resin is poor in mechanical strength and heat resistance by itself, so that the resin is generally improved in performance by adding a fibrous material such as glass fiber or carbon fiber or a powdery, granular or flaky inorganic filler thereto prior to its use. However, a composite material comprising a polyarylene sulfide resin and carbon fiber has problems in that the homogeneous dispersion of carbon fiber in the resin is difficult, because shorter carbon fibers tends to scatter in the preparation of the composite material, while longer carbon fiber tends to intertwine to form many lumps and that carbon fiber is too poor in adhesion to a polyarylene sulfide resin to exhibit its original reinforcing effect sufficiently. Therefore, the coating of carbon fiber with an epoxy resin or other finishing agent has been made for the purpose of overcoming these problems. However, no process for the treatment of carbon fiber which can satisfactorily improve not only the handleability of carbon fiber but also the physical properties of the composite material has been established as yet.

( Summary of the Invention )

Under these circumstances, the inventors of the present invention have made many studies on carbon fiber for reinforcing a polyarylene sulfide resin, particularly on finishing agents for such carbon fiber which can improve the reinforcing effect of carbon fiber on a polyarylene sulfide resin so as to give a polyarylene sulfide resin/carbon fiber composite material excellent in mechanical properties and heat resistance. The present invention has been accomplished on the basis of the studies.

Namely, the present invention provides a polyarylene sulfide resin composition comprising (A) a polyarylene sulfide resin, (B) 1 to 60% by weight based on the total amount of the composition of carbon fiber and (C) 0 to 50% by weight based on the total amount of the composition of an inorganic filler other than carbon fiber, charac terized in that the carbon fiber (B) contains 0.1 to 15% by weight based on the carbon fiber of a polyurethane resin adhering thereto and that the sum total of the components (B) and (C) does not exceed 70% by weight of the composition.

In the invention, a polyarylene sulfide resin composition comprises (A) a polyarylene sulfide resin and (B) 1 to 60 percent by weight of a carbon fiber onto which 0.1 to 15 percent by weight, based on the carbon fiber, of a polyurethane resin has been attached.

It may further comprise up to 50 percent by weight of an inorganic filler (C) other than carbon fiber, the total amount of (B) and (C) being not more than 70 percent by weight.

It is preferable that the carbon fiber has been treated on the surface with oxidation to have a functional group of -COOH, -OH or -CO on the surface or with a silane compound and then has been treated with the polyurethane resin.

According to the present invention, a specified amount of a urethane resin is made to adhere to the carbon fiber to be used. Thereby, the handleability of carbon fiber is remarkably improved and the homogeneous dispersion of carbon fiber in a polyarylene sulfide resin becomes possible. Further, the adhesion of carbon fiber to a polyarylene sulfide resin is also improved, so that the remarkable reinforcing effect of carbon fiber can be exhibited to give a resin composition which is excellent in physical and mechanical properties and heat resistance and can be favorably used at high temperature.

The resin to be used in the present invention as a base is a polyarylene sulfide resin (A), which comprises at least 90 molar % of a repeating unit represented by the following structural formula :

$—\!(\!—Ar - S—\!)\!—$ (wherein Ar is an aryl group)

Representative examples thereof are polyphenylene sulfide resins comprising at least 90 molar % of a repeating unit of

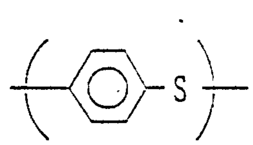

Particularly, it is preferred that the polyarylene sulfide resin has a viscosity(as determined at 310 °C and at a shear rate of 1200 $sec^{-1}$) of 10 to 20000 poise, more preferably 100 to 5000 poise.

The resin to be used as a base in the present

invention may contain a small amount of a thermoplastic resin other than a polyarylene sulfide resin as an auxiliary component depending upon the object in addition to a polyarylene sulfide as described above.

The thermoplastic resin may be any one as far as it is stable at high temperature. Examples thereof include aromatic polyesters prepared from aromatic dicarboxylic acids and diols or aromatic oxycarboxylic acids (for example, polyethylene terephthalate and polybutylene terephthalate), polyacrylate, polyacetal (homo- or co-polymer), polystyrene, styrene-acrylonitrile copolymers, polyvinyl chloride, various polyamide, polyimide, polycarbonate, ABS, polyphenylene oxide, polyalkyl acrylate,polysulfone, polyether sulfone and fluororesins, which may be used as a mixture of two or more of them.

The carbon fiber (B) to be used in the present invention contains a specified amount of a polyurethane resin adhering thereto. The basic carbon fiber to be used in the preparation of the carbon fiber containing a polyurethane resin can be prepared by firing various fibers such as acrylic fiber, rayon fiber or lignin fiber or petroleum or petroleum pitch fiber and may be of any type among carbonaceous, graphitic and flame-retardant ones. Particularly, carbon fiber derived from acrylic fiber is preferred.

The basic carbon fiber may be either subjected to surface treatment or not prior to the addition and adhesion of a polyurethane resin thereto. That is, the addition and adhesion of a polyurethane resin may be carried out to either untreated carbon fiber or carbon fiber which has been preliminarily subjected to surface oxidation to thereby introduce functional groups such as -COOH, -OH or -CO thereto. Alternatively, the addition and adhesion may be carried out to carbon fiber which has been preliminarily treated with an ordinary finishing agent, for example, silanes such as aminosilane.

The carbon fiber used in the present invention is characterized by containing a polyurethane resin adhering to the surface thereof. The diameter of the carbon fiber is about 4 to 20$\mu$, preferably 5 to 15$\mu$.

According to the present invention, the content of the carbon fiber in the composition is 1 to 60% by weight, preferably 5 to 50% by weight. If the content is too small, little reinforcing effect will be attained, while it is too large, the preparation of the composition and the fluidity thereof at molding will be unfavorably affected .

The polyurethane resin to be used in the present invention is a thermoplastic one prepared by the reaction between diisocyanate and polyol.

Examples of the diisocyanate include tolylene diisocyanate, diphenylmethane diisocyanate, tolidine diisocyanate, hexamethylene diisocyanate and m-xylylene diisocyanate, while those of the polyol include polytetrahydrofuran, 1,4-butanediol and 1,4-butynediol, though the raw materials for the polyurethane resin are not limited to them.

Although such a polyurethane resin may be added together with carbon fiber in mixing the composition to make the polyurethane resin adhere to the carbon fiber, it is preferred to use carbon fiber to which a polyurethane resin has been preliminarily made to adhere, or material obtained by integrating many carbon fibers with a polyurethane resin. The adhesion and integration may be carried out by a process comprising dipping a carbon fiber strand in a solution of a polyurethane resin in a solvent such as acetone and removing the solvent from the resulting strand or a process comprising dipping carbon fibers in an emulsion of a polyurethane and drying the resulting fibers. Thus, although the use of long carbon filament as the carbon fiber is possible in the present invention, it is conventional to use chopped carbon strand comprising 50 to 2000 filaments and having a length of 1 to 10 mm.

The amount of the polyurethane resin to be used is 0.1 to 15% by weight, preferably 0.5 to 10% by weight based on the carbon fiber used. If the amount is too small, the adhesion of carbon fiber to a polyarylene sulfide resin will not be enhanced sufficiently, while if the amount is too large, the mechanical properties and heat resistance of the composition will be unfavorably affected.

Meanwhile, although the inorganic filler (C) other than carbon fiber is not always essential according to the present invention, the addition thereof is preferred to obtain a molded article excellent in mechanical strength, heat resistance, dimensional stability (resistance to deformation and warpage), electric properties and so on. Depending upon the object, a fibrous, powdery, granular or flaky inorganic filler may be used as the component (C).

Examples of the fibrous inorganic filler include glass fiber, asbestos fiber, silica fiber, silica/alumina fiber, alumina fiber, zirconia fiber, boron nitride fiber, silicon nitride fiber, boron fiber, potassium titanate fiber and fibrous materials of metals such as stainless steel, aluminum,titanium, copper or bass, among which glass fiber is representative. Further, a high-melting organic fibrous material such as polyamide, fluororesin, polyester resin or acrylic resin may be used.

Examples of the powdery and granular fillers include carbon black, graphite, silica, quartz powder, glass bead, glass balloon, glass powder, silicates such as calcium silicate, aluminum silicate, kaolin, talc, clay, diatomaceous earth and wollastonite; metal oxides such as iron oxides, titanium

oxide, zinc oxide, antimony trioxide and alumina; metal carbonates such as calcium carbonate and magnesium carbonate; metal sulfates such as calcium sulfate and barium sulfate; ferrite, silicon carbide, silicon nitride, boron nitride and various metal powders.

Examples of the flaky filler include mica, glass flake and various metal foils.

These inorganic fillers may be used either alone or as a mixture of them. The simultaneous use of a granular one and a flaky one is particularly preferred in order to improve the mechanical strength, dimensional accuracy and electric properties of the composition simultaneously.

When an inorganic filler as described above is used, it is preferred to use a integrating or finishing agent therewith. Although it is a matter of course that polyurethane is preferably used as such a integrating or finishing agent, the agent is not always limited to it.

The amount of the inorganic filler (C) is at most 50% by weight based on the composition and is also limited by the amount of the carbon fiber used as the component (B). That is, the sum total of the carbon fiber (B) and the inorganic filler (C) must not exceed 70% by weight of the composition and is preferably 10 to 60% by weight.

The composition of the present invention may further contain known substances which are ordinarily added to thermoplastic or thermosetting resins. Namely, the composition may suitably contain a stabilizer such as antioxidant or ultraviolet absorber, antistatic agent, flame-retardant, coloring agent such as dye or pigment, lubricant, mold release agent or crystallization accelerator (nucleating agent) depending upon the required performances.

The polyarylene resin composition of the present invention can be prepared with an ordinary equipment for the preparation of a synthetic resin composition and by an ordinary process therefor. That is, the polyarylene sulfide resin composition can be prepared by a process which comprises mixing the required components and kneading and extruding the obtained mixture with a single- or twin-screw extruder to obtain a pellet. In this process, a portion of the required components may be mixed as a master batch, followed by the molding of the obtained mixture. Alternatively, in order to improve the dispersibility of each component, a part or the whole of the polyarylene sulfide resin may be ground and mixed with the other components, followed by the melt extrusion of the obtained mixture. Further, it is preferred that the carbon fiber dispersed in the composition have an average fiber length of 0.1 to 10 mm and this requirement can be attained by selecting the material and controlling the conditions for the preparation of the composition.

The composition of the present invention is characterized by containing a polyurethane resin-finished carbon fiber. Owing to this characteristic, the composition can be prepared and molded more easily as compared with the carbon fiber-filled polyarylene sulfide resin composition according to the prior art and exhibits improved physical properties such as mechanical strength and excellent heat resistance. Thus, the composition exhibits excellent performances as a material of electric or electronic parts, automobile parts or other high-performance mechanical parts.

The present invention will now be described in more detail by referring to the following Examples, though it is not limited by them at all.

## Example 1

3% by weight of a thermoplastic polyurethane was made to adhere to a carbon fiber strand prepared by firing an acrylonitrile fiber and subjecting the fired fiber to surface oxidation, thereby integrating the fiber strand. The integrated strand was cut to obtain a chopped strand having a length of 6 mm. 30% by weight of this chopped strand was mixed with 70% by weight of a polyphenylene sulfide resin. The obtained mixture was kneaded and extruded with an extruder to obtain a pellet. This pellet was molded with an injection machine to prepare a test piece. This test piece was examined for physical properties according to ASTM. The results are shown in Table 1.

In the above operation, the handleability of the chopped carbon strand was good and the extrusion and molding of the composition were carried out easily and smoothly.

## Comparative Example 1

A chopped strand was prepared in the same manner as that described in Example 1 except that an epoxy resin was used instead of the thermoplastic polyurethane. The kneading of this chopped strand with polyphenylene sulfide, the pelletizing of the mixture and the examination of the resulting test piece were carried out in the same manner as that described in Example 1. The results are shown in Table 1.

Comparative Example 2

The same procedure as that described in Example 1 was repeated except that polyvinyl alcohol was used instead of the thermoplastic polyurethane. The results are shown in Table 1.

Comparative Example 3

A test piece was prepared in the same manner as that described in Example 1 except that no finishing agent was made to adhere to the carbon fiber strand and examined in the same manner as that used in Example 1. The strand integrity was poor to result in poor handleability. Therefore, the feed opening of the extruder was so frequently blocked that the smooth extrusion was impossible. The results of the above examination are also shown in Table 1.

Table 1

| | Example 1 | Comp. Ex. 1 | Comp. Ex. 2 | Comp. Ex. 3 |
|---|---|---|---|---|
| integrating agent | thermoplastic polyurethane | epoxy resin | polyvinyl alcohol | not used |
| tensile strength (kgf / cm2) | 1,990 | 1,870 | 1,710 | 1,650 |
| flexural strength (kgf / cm2) | 2,760 | 2,530 | 2,500 | 2,300 |
| flexural modulus (kgf / cm2) | 180,000 | 180,000 | 178,000 | 175,000 |
| Izod impact strength (notched; kgfcm / cm) | 5.3 | 4.2 | 4.3 | 4.0 |

Examples 2 to 4

The same carbon fiber strand as that used in Example 1 was integrated with 5% by weight of a thermoplastic polyurethane and cut to obtain a chopped strand having a length of 6 mm. A carbon fiber-filled polyphenylene sulfide pellet having a composition given in Table 2 was prepared by using the chopped strand and molded into a test piece in the same manner as that used in Example 1. This test piece was examined for physical properties in the same manner as that used in Example 1. The results are shown in Table 2.

Comparative Examples 4 to 6

Carbon fiber-filled polyphenylene sulfide pellets having the same compositions as those used in Examples 2 to 4 were prepared except that no integrating agent was added to the carbon fiber strand. The preparation of the pellets was not smooth. The obtained pellets were molded into test pieces. These test pieces were examined for physical properties. The results are shown in Table 2.

Table 2

| | Ex. 2 | Comp. Ex. 4 | Ex. 3 | Comp. Ex. 5 | Ex. 4 | Comp. Ex. 6 |
|---|---|---|---|---|---|---|
| glass fiber (%) | -- | -- | 20 | 20 | -- | -- |
| calcium carbonate (%) | -- | -- | -- | -- | 20 | 20 |
| carbon fiber (%) | 15 | 15 | 20 | 20 | 30 | 30 |
| polyurethane (integrating agent) | used | not used | used | not used | used | not used |
| tensile strength (kgf / cm2) | 1,670 | 1,380 | 1,890 | 1,530 | 1,480 | 1,050 |
| flexural strength (kgf / cm2) | 2,380 | 1,900 | 2,750 | 2,200 | 2,210 | 1,700 |
| flexural modulus (kgf / cm2) | 130,000 | 120,000 | 177,000 | 169,000 | 198,000 | 189,000 |
| Izod impact strength (notched; kgfcm / cm) | 4.2 | 3.3 | 7.2 | 5.5 | 3.9 | 2.9 |

## Claims

1. A polyarylene sulfide resin composition which comprises (A) a polyarylene sulfide resin and (B) 1 to 60 percent by weight of a carbon fiber onto which 0.1 to 15 percent by weight, based on the carbon fiber, of a polyurethane resin has been attached.

2. A composition as claimed in Claim 1, which further comprises up to 50 percent by weight of (C) an inorganic filler other than carbon fiber, the total amount of (B) and (C) being not more than 70 percent by weight.

3. A composition as claimed in Claim 1 or 2, in which the carbon fiber has been treated on the surface with oxidation to have a functional group of -COOH, -OH or -CO on the surface or with a silane compound and then has been treated with the polyurethane resin.

4. A composition as claimed in any preceding claim, in which the polyarylene sulfide resin (A) comprises at least 90 molar percent of a repeating unit represented by the structural formula

$$-\!\!\!-\!\!\!(\ Ar - S\ )\!\!\!-\!\!\!-$$

wherein Ar is an aryl group.

5. A composition as claimed in any preceding claim, in which the polyarylene sulphide resin has a viscosity (as determined at 310°C and at a shear rate of 1200 $sec^{-1}$) of 10 to 20000 poise.

6. A composition as claimed in any preceding claim, in which the carbon fiber has a diameter in the range 4 to 20μ.

7. A composition as claimed in any preceding claim, in which the content of carbon fiber is in the range 5 to 50% by weight.

8. A composition as claimed in any preceding claim, in which the amount of polyurethane resin is 0.5 to 10% by weight based on the weight of carbon fiber.

9. A composition as claimed in claim 2 or in any other preceding claim when dependent upon claim 2, in which the inorganic filler (C) is a mixture of a granular filler and a flaky filler.

10. A composition as claimed in claim 2 or in any preceding claim when dependent upon claim 2, in which the total quantity of carbon fiber (B) and inorganic filler (C) is in the range 10 to 60% by weight.